# EUROPÄISCHE PATENTSCHRIFT

(11) **EP 1 216 332 B1**
(45) Veröffentlichungstag und Bekanntmachung des Hinweises auf die Patenterteilung: **27.08.2003**
(21) Anmeldenummer: 01945277.0
(22) Anmeldetag: 16.06.2001
(51) Int. Cl.: E04B 1/41, E04B 1/26

(54) **VERBINDUNGSSYSTEM ZUM FESTEN VERBINDEN VON MINDESTENS ZWEI ELEMENTEN**
CONNECTION SYSTEM FOR FIRMLY CONNECTING AT LEAST TWO ELEMENTS
SYSTEME DE LIAISON DESTINE A LA FIXATION RIGIDE D'AU MOINS DEUX ELEMENTS

(30) Priorität: 20.06.2000 DE 10029343
(43) Veröffentlichungstag der Anmeldung: 26.06.2002
(73) Patentinhaber: INDUO Gesellschaft zur Verwertung von Schutzrechten mbH & Co. KG, 41352 Korschenbroich (DE)
(72) Erfinder: REICHARTZ, Paul, 41352 Korschenbroich (DE)
(74) Vertreter: Bergen, Klaus, Dipl.-Ing.
(86) Internationale Anmeldenummer: EP0106827
(87) Internationale Veröffentlichungsnummer: WO01098597

(56) Entgegenhaltungen:
- EP-A- 0 127 095
- EP-A- 0 685 609
- DE-C- 19 701 458

## Beschreibung

Die Erfindung betrifft eine Verbindung zum festen Verbinden von mindestens zwei flächen- oder stabförmigen Bautellen, bestehend aus
- mindestens einem aus Holz oder Holzwerkstoff bestehenden ersten Bauteil, insbesondere Balken, das mit einem seiner Enden an dem anderen Bauteil an einer Kontaktfläche angrenzt und an diesem mit einem Verbindungsmittel befestigt ist, und
- mindestens einem mit dem ersten Bauteil verbundenen, in eine Ausnehmung in diesem integriert, eingelegten Verbundanker aus hochfestem Material.

### Stand der Technik

Ein Verbindungssystem der gattungsgemäßen Art ist aus der DE 197 01 458 C1 bekannt. Die dort beschriebenen Verbindungssysteme haben sich besonders im Holzbau bewährt. Zur Sicherstellung eines stabilen Verbundes wird ein Trägerbalken - meist mittig - geteilt und eine Ausnehmung im Inneren des Balkens eingearbeitet. Die Querschnittskontur der Ausnehmung entspricht derjenigen eines metallischen Verbundankers, der in den Balken integriert wird. Zwecks festem Halt Ist der Verbundanker mit einer Vielzahl von Dornen ausgestattet, die einem komplementären Lochmuster im Balken entspricht. Im Verbundanker sind Gewindebohrungen eingearbeitet, so daß ein Anschlußteil mittels Schrauben fest verbunden werden kann.

Verbindungssysteme der vorbekannten Art gelangen jedoch gelegentlich an die Grenze, was ihre Montierbarkeit anbelangt. Bei beengten Platzverhältnissen kann es unter Umständen schwierig sein, den Balkenverbund herzustellen, da nicht genügend Platz und damit nicht die Zugänglichkeit vorhanden ist, um Schrauben von außen an einen mit einem Verbundanker ausgestatteten Träger anzubringen.

### Darstellung der Erfindung

Der Erfindung liegt daher die **Aufgabe** zugrunde, ein Verbundsystem der gattungsgemäßen Art so weiterzuentwickeln, daß ein vereinfachtes und damit auch kostengünstiges Anbringen von mit einem Verbundanker ausgestatteten Balken an beliebige Anschlußelemente möglich ist.

Die **Lösung** dieser Aufgabe durch die Erfindung ist dadurch gekennzeichnet, daß der Verbundanker mit einer durchgehenden Ausnehmung versehen ist, durch die sich das Verbindungsmittel frei längs bewegbar erstreckt und mit einem Gegenabschnitt am oder im anderen Element formschlüssig zusammenwirkt, und daß das erste Bauteil an der von dem anderen Bauteil abgewandten Seite des Verbundankers eine Ausnehmung aufweist, deren Längsachse mit derjenigen des ersten Bauteils einen Winkel einschließt, wobei sich beide Ausnehmungen schneiden, so daß das Verbindungsmittel zugänglich ist.

Das Anschlußteil in Form des als solchen vorbekannten Verbundankers weist zur integralen Verankerung in einem der Bauteile eine Anzahl Vorsprünge, d. h. namentlich Dorne, auf. Häufig ist das das Anschlußteil aufnehmende Bauteil als Balken ausgebildet. Wie als solches bereits vorbekannt, kann das den Verbundanker aufnehmende Bauteil zur Einbringung des Ankers, bevorzugt in seiner Mittenebene, teilbar ausgebildet sein. Es kommt aber auch insbesondere die Teilung in einer Ebene in Frage, in der die Zug- oder Druckzone des Balkens liegt; auf diese Art und Weise wird die Balkenkraft bestmöglich in den Verbundanker eingeleitet und von diesem übertragen.

Gemäß einer bevorzugten Fortbildung ist vorgesehen, daß das Verbindungsmittel zur Befestigung an dem anderen Bauteil mit einem Gewindeabschnitt ausgestattet ist, der mit einer Gewindebohrung am oder im anderen Bauteil zusammenwirkt. Auch kann beispielsweise an einen kugel- oder hakenförmigen Endabschnitt des Verbindungsmittels gedacht werden, das mit einer Einhängverbindung oder Klickverbindung im anderen Bauteil zusammenwirkt.

Als Verbindungsmittel kommt bevorzugt eine Schraube zum Einsatz, insbesondere eine Zylinderschraube mit Innensechskant (Imbusschraube). Dabei weist der Kopf der Schraube mit Vorteil einen Durchmesser auf, der größer ist als der Durchmesser der in den Verbundanker eingebrachten Bohrung. Weiter kann der Kopf der Schraube an der dem anderen Element abgewandten Seite des Verbundankers angeordnet sein.

Zur Aufnahme des Verbundankers in den Balken ist weiterbildungsgemäß eine entlang der Längsachse des Balkens verlaufende Ausnehmung, vorzugsweise mit einem Querschnitt in Form einer Raute oder eines Quadrats, eingearbeitet, die sich über die Länge des Verbundankers zumindest geringfügig hinaus erstreckt. Meist wird sich jedoch die entlang der Längsachse des Balkens verlaufende Ausnehmung über die gesamte Länge des Balkens erstrecken, was fertigungstechnisch einfacher sein kann.

Zur Montage des Elements, vorzugsweise eines Balkens, an dem anderen Element ist vorgesehen, daß dieses an der von dem anderen Element abgewandten Seite des Verbundankers eine Ausnehmung aufweist, deren Längsachse mit derjenigen des Elements, vorzugsweise des Balkens, einen Winkel einschließt, wobei sich beide Ausnehmungen schneiden. Hierbei ist mit Vorteil vorgesehen, daß der Winkel zwischen 20° und 60° beträgt, vorzugsweise zwischen 30° und 50°.

Wenngleich bevorzugt als erstes Element ein Balken vorgesehen ist, läßt sich die Erfindung genauso auf beliebige andere zu verbindende Elemente anwenden, insbesondere auf flächen- oder stabförmige Bauteile, wie beispielsweise Platten.

Nach der Montage kann die Öffnung, die die winklig angeordnete Ausnehmung an der Oberfläche des Balkens bildet, mit einem Verschluß, insbesondere mit einem Stopfen, versehen werden.

Eine weitere Vereinfachung des Montagevorgangs ergibt sich, wenn im Balken von der Kontaktfläche aus gesehen hinter der Schraube ein Sicherungselement angeordnet ist, das eine Verschiebung der Schraube relativ zum Anschlußteil verhindert; das Sicherungselement ist dabei bevorzugt ein Stift. Dieser ist vorteilhafterweise in einem Abstand vom Ende der Schraube im montierten Zustand von 5 bis 200 mm, vorzugsweise von 75 bis 125 mm, angeordnet.

Die zu verbindenden Elemente, insbesondere die Balken, können aus Holz, aus Metall, insbesondere aus Stahl, oder aus Stahlbeton bestehen. Genauso kann eine Verbindung zu bzw. zwischen Mauerwerken oder Mauerwerksteilen hergestellt werden. Weiterhin kann eines oder auch beide der zu verbindenden Elemente aus Kunststoff bestehen. D.h. das vorgeschlagene Verbindungssystem eignet sich für die verschiedensten Einsätze, besonders vorteilhaft bei Holz-Kreuzbalken in einem Holztragwerk.

Die besonders vorteilhaften Verwendungen des Verbindungssystem sind im Holzbau und dort in Tragwerken oder Fachwerken, aber auch im Möbelbau, insbesondere im Massivholzmöbelbau. Vorteilhaft wird es auch beim Verbau von Plattenwerkstoffen verwendet, vorzugsweise bei solchen Platten, die aus mehreren Holzschichten zusammengesetzt sind.

### Gewerbliche Anwendbarkeit

Durch das vorgeschlagene Verbindungssystem werden sehr einfache und preiswerte Verbindungen möglich, die sich beispielsweise auf Holz-Holz, Holz-Stahl, Holz-Stahlbeton und Holz-Mauerwerk anwenden lassen. Sie ermöglichen es, dichte Packungen bzw. Anordnungen aus mehreren Balkenelementen zu realisieren.

Sehr vorteilhaft ist es, daß bei beliebigen Verbindungen keine sichtbaren Anschlüsse verbleiben. Durch den Abschluß ergibt sich vorteilhafterwelse auch ein verbesserter Brandschutz.

Mit dem erfindungsgemäßen Verbindungssystem können mehrgeschossige, insbesondere zwei- bis dreigeschossige Holzstützen realisiert und verbaut werden. Dies führt zu neuen Möglichkeiten im Holzbau.

Mit dem erfindungsgemäßen Verbindungssystem können nicht nur zwei, sondern auch mehrere kombinierte Anschlüsse hergestellt werden. Hierbei können symmetrische oder unsymmetrische Ausgestaltungen, insbesondere mit beliebigen Balkenquerschnitten, erzeugt werden. Namentlich sind auf besonders einfache Weise knotenpunktartige Anschlüsse herstellbar, bei denen symmetrische oder außermittig positionierte Elemente zusammentreffen.

### Kurze Beschreibung der Zeichnungen

In der Zeichnung ist ein Ausführungsbeispiel der Erfindung dargestellt.
Es zeigen:
- Fig. 1: schematisch den Schnitt durch ein Verbindungssystem, bestehend aus zwei Balken, die an einem Hauptträger befestigt sind;
- Fig. 2: eine perspektivische Ansicht des Anschlußteils und des Verbindungsmittels vor der Montage;
- Fig. 3: Anschlußteil und Verbindungsmittel in zusammengeführtem Zustand;
- Fig. 4: eine Ansicht des in den Balken eingelegten Anschlußteils samt Verbindungsmittel;
- Fig. 5: den Montagevorgang des Balkens an ein zweites Element; und
- Fig. 6: eine perspektivische Ansicht des Balkens im montierfähigen Zustand.

### Wege zur Ausführung der Erfindung

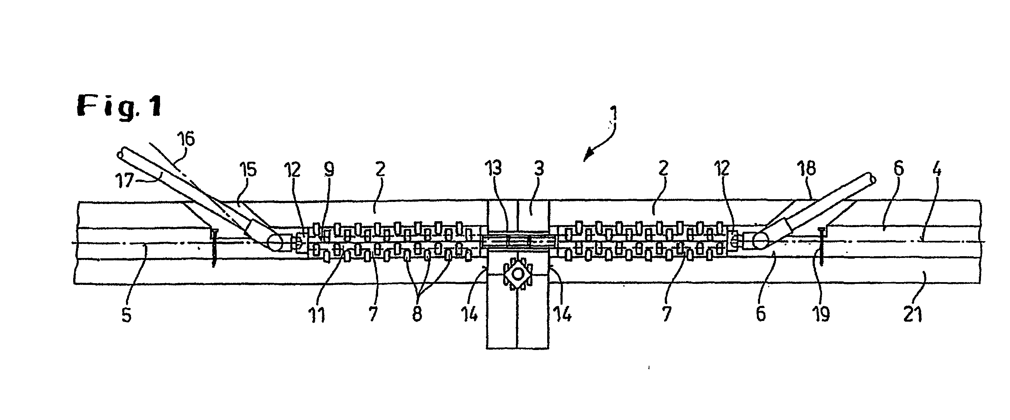

Fig. 1 zeigt schematisch den Schnitt durch ein Verbindungssystems 1. Zwei Balken 2 - als Nebenträger eines Holztragwerks ausgebildet - sind an einem Hauptträger 3 befestigt. Zwecks Herstellung einer stabilen Verbindung zwischen den Elementen 2 und 3 sind die Balken 2 in der Ebene 4 der größten Druck- bzw. Zugspannung geteilt ausgeführt. Beidseits der Teilungsebene 4 sind in die Balken 2 entlang der Längsachse 5 des Balkens verlaufende Ausnehmungen 6 eingearbeitet, die im Querschnitt die Form einer Raute aufweisen.

Die Ausnehmungen 6 sind der Grundform des Verbundankers 7 angepaßt, der mit Dornen 8 versehen ist, um im Balken 2 festen Halt zu finden.

Der Verbundanker 7 ist mit einer durchgehenden Bohrung 9 versehen. Durch diese Bohrung 9 kann das Verbindungsmittel 11 in Form einer Imbusschraube hindurchgeführt werden. Der Durchmesser der Bohrung 9 im Verbundanker 7 ist dabei geringer als der Durchmesser des Schraubenkopfes 12. Damit kann der Verbundanker 7 - und dadurch auch der Balken 2 - durch Anziehen der Schraube 11 fest mit dem Hauptträger 3 verbunden werden, in den eine Gewindehülse 13 fest eingebracht ist. Der Kopf 12 der Imbusschraube 11 ist also an der von der Kontaktfläche 14 zwischen Balken 2 und Hauptträger 3 entfernten Seite des Verbundankers 7 angeordnet.

Zur Montage des Balkens 2 an den Hauptträger 3 wird wie folgt vorgegangen:

Hinter dem Verbundanker 7 - von der Kontaktfläche 14 aus gesehen - befindet sich neben der längsverlaufenden Ausnehmung 6 im Balken 2 eine weitere Ausnehmung 15. Deren Achse 16 ist unter einem Winkel zur Längsachse 5 des Balkens 2 angeordnet. Beide Ausnehmungen - die längsverlaufende 6 im Balken und die hierzu im Winkel verlaufende 15 - schneiden sich, so daß sich von außen her ein Zugang zur Ausnehmung 6 ergibt. Der Winkel, unter dem die Ausnehmung 15 zur Längsachse 5 verläuft, bewegt sich bevorzugt zwischen 30° und 50°.

Zwecks Anschrauben des Balkens wird ein geeignetes Werkzeug (z.B. ein Gelenkschlüssel mit Kardanwellenantrieb 17 oder eine biegsame Welle) in die Ausnehmung 15 und weiter in die Ausnehmung 6 eingeführt und der Kopf 12 der Imbusschraube 11 erfaßt und gedreht. Die Schraube kann mit dem gewünschten Drehmoment angezogen werden. Nach dem Festziehen der Schraube 11 kann die Öffnung 18, die die Ausnehmung 15 auf der Balkenaußenseite schafft, mittels eines nicht dargestellten Stopfens verschlossen werden; beispielsweise kann ein paßgenauer Holzstopfen eingeleimt werden.

Damit die Schraube 11 vor der Montage nicht aus dem Verbundanker 7 herausrutschen kann, ist ein Sicherungsstift 19 in geringem Abstand hinter dem Verbundanker 7 angeordnet.

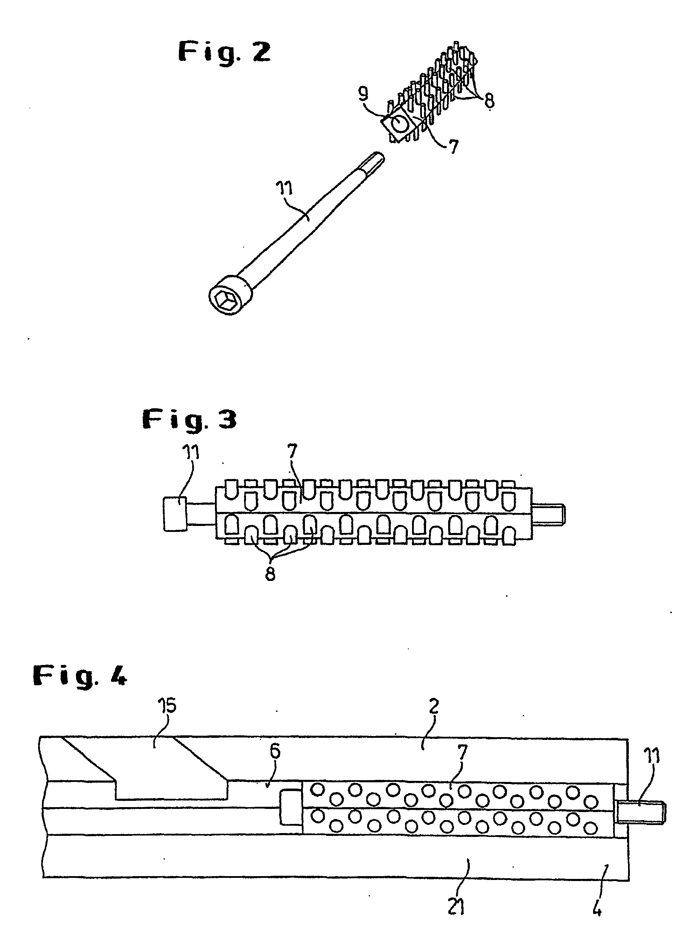

In Fig. 2 ist in perspektivischer Ansicht der Verbundanker 7 mit seinen Dornen 8 zu erkennen. Der Verbundanker 7 ist als längliches Teil ausgebildet, das von der Bohrung 9 durchsetzt wird. Die Imbusschraube 11 ist vor dem Einschieben in den Verbundanker 7 dargestellt.

Fig. 3 zeigt dem gegenüber die seitliche Ansicht des Verbundankers 7 mit eingesetzter Schraube 11.

Fig. 4 zeigt die untere Hälfte 21 des an der Teilungsebene 4 geteilten Balkens 2. In die längsverlaufende Ausnehmung 6 im Balken 2 ist der Verbundanker 7 mit hindurchtretender Schraube 11 eingesetzt worden. Weiterhin ist die winklig angeordnete Ausnehmung 15 zu erkennen, die die Ausnehmung 6 schneidet.

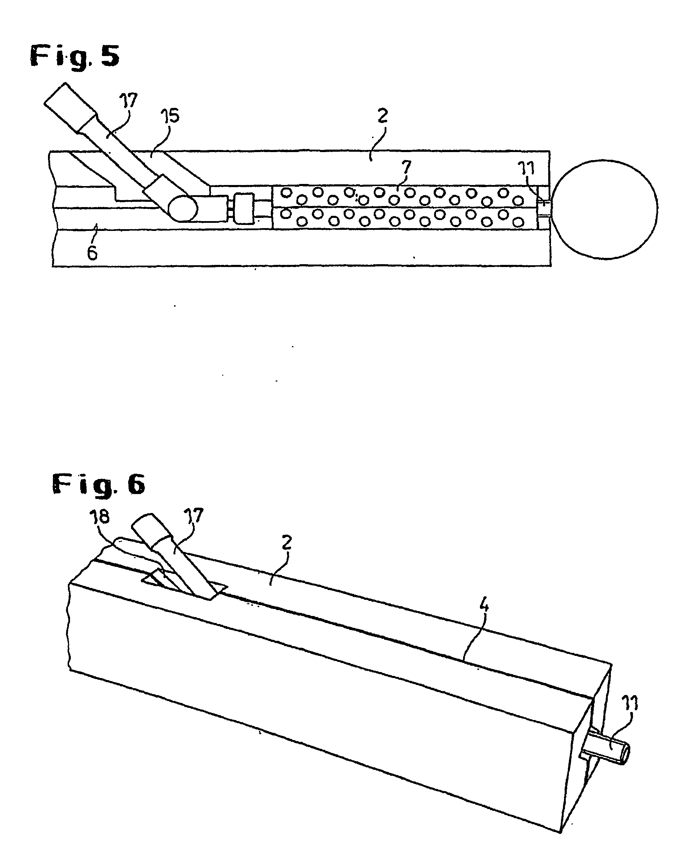

Ein ähnlicher Aufbau ist in Fig. 5 dargestellt. Dort ist weiterhin zu erkennen, wie der Balken 2 über den Verbundanker 7 und die Schraube 11 mit einem - hier kugelförmigen - zweiten Element verbunden wird. An das kugelförmige Element können weitere Balken 2 angeschraubt werden, um den Knotenpunkt eines Fachwerks zu erzeugen.

Mittels des Werkzeugs 17 wird die Schraube 11 festgezogen. Das Werkzeug 17 erstreckt sich dabei von der Ausnehmung 15 bis in die Ausnehmung 6, in der der Verbundanker 7 angeordnet ist.

Eine perspektivische Darstellung des Balkens 2 im montierfertigen Zustand ist in Fig. 6 zu sehen. Der Balken 2 ist aus seinen beiden Hälften zusammengesetzt, die an der Teilungsebene 4 zusammenliegen. Das Werkzeug 17 ist in die Öffnung 18 eingesetzt, um die Schraube 11 anziehen zu können.

## Patentansprüche

1. Verbindung (1) zum festen Verbinden von mindestens zwei flächen- oder stabförmigen Bauteilen (2, 3), bestehend aus
- mindestens einem aus Holz oder Holzwerkstoff bestehenden ersten Bauteil (2), insbesondere Balken, das mit einem seiner Enden an dem anderen Bauteil (3) an einer Kontaktfläche (14) angrenzt und an diesem mit einem Verbindungsmittel (11) befestigt ist, und
- mindestens einem mit dem ersten Bauteil (2) verbundenen, in eine Ausnehmung (6) in diesem integriert, eingelegten Verbundanker (7) aus hochfestem Material,
**dadurch gekennzeichnet,**
**daß** der Verbundanker (7) mit einer durchgehenden Ausnehmung (9) versehen ist, durch die sich das Verbindungsmittel (11) frei längs bewegbar erstreckt und mit einem Gegenabschnitt am oder im anderen Element (3) formschlüssig zusammenwirkt, und daß das erste Bauteil (2) an der von dem anderen Bauteil (3) abgewandten Seite des Verbundankers (7) eine Ausnehmung (15) aufweist, deren Längsachse (16) mit derjenigen (5) des ersten Bauteils (2) einen Winkel einschließt, wobei sich beide Ausnehmungen (5, 15; 6, 18) schneiden, so daß das Verbindungsmittel (11) zugänglich ist.

2. Verbindung nach Anspruch 1, **dadurch gekennzeichnet, daß** der Verbundanker (7) zur integralen Verankerung mit einer Anzahl von Vorsprüngen (8), insbesondere Dornen, versehen ist.

3. Verbindung nach einem der Ansprüche 1 bis 2, **dadurch gekennzeichnet, daß** das Bauteil (2) zur Einbringung des Verbundankers (7), bevorzugt in seiner Mittenebene (4), teilbar ausgebildet ist.

4. Verbindung nach Anspruch 3, **dadurch gekennzeichnet, daß** das Bauteil (2) zur Aufnahme des Verbundankers (7) in der Ebene (4) geteilt ist, in der die Zug- oder Druckzone des Bauteils (2) liegt.

5. Verbindung nach einem der Ansprüche 1 bis 4, **dadurch gekennzeichnet, daß** das Verbindungsmittel (11) zur Befestigung an dem anderen Bauteil (3) mit einem Gewindeabschnitt ausgestattet ist, der mit einer Gewindebohrung am oder im anderen Bauteil (3) zusammenwirkt.

6. Verbindung nach einem der Ansprüche 1 bis 5, **dadurch gekennzeichnet, daß** das Verbindungsmittel (11) eine Schraube, vorzugsweise eine Zylinderschraube mit Innensechskant ist.

7. Verbindung nach Anspruch 6, **dadurch gekennzeichnet, daß** der Kopf (12) der Schraube (11) einen Durchmesser aufweist, der größer ist als der Durchmesser der in den Verbundanker (7) eingebrachten Bohrung (9).

8. Verbindung nach Anspruch 6 oder 7, **dadurch gekennzeichnet, daß** der Kopf (12) der Schraube (11), insbesondere der Zylinderkopfschraube mit Innensechskant, an der dem anderen Bauteil (3) abgewandten Seite des Verbundankers (7) angeordnet ist.

9. Verbindung nach einem der Ansprüche 1 bis 8, **dadurch gekennzeichnet, daß** die der Aufnahme des Verbundankers (7) dienende Ausnehmung (6), vorzugsweise mit einem Querschnitt in Form einer Raute oder eines Quadrats, sich über die Länge des Verbundankers (7) zumindest geringfügig hinaus erstreckt.

10. Verbindung nach Anspruch 9, **dadurch gekennzeichnet, daß** die entlang der Längsachse (5) des Bauteils (2) verlaufende Ausnehmung (6) sich über die gesamte Länge des Bauteils (2) erstreckt.

11. Verbindung nach einem der Ansprüche 1 bis 10, **dadurch gekennzeichnet, daß** der Winkel der Ausnehmungen (5, 15) zueinander zwischen 20° und 60° beträgt, vorzugsweise zwischen 30° und 50°.

12. Verbindung nach Anspruch 10 oder 11, **dadurch gekennzeichnet, daß** die winklig angeordnete Ausnehmung (15) an der Oberfläche des Bauteils (2) mit einem Verschluß, insbesondere mit einem Stopfen, versehen ist.

13. Verbindung nach einem der Ansprüche 1 bis 12, **dadurch gekennzeichnet, daß** im ersten Bauteil (2), von der Kontaktfläche (14) aus gesehen, hinter dem Verbindungsmittel (11), ein Sicherungselement (19) angeordnet ist, das eine Verschiebung des Verbindungsmittels (11) relativ zum Verbundanker (7) verhindert.

14. Verbindung nach Anspruch 13, **dadurch gekennzeichnet, daß** das Sicherungselement (19) ein Stift Ist.

15. Verbindung nach Anspruch 13 oder 14, **dadurch gekennzeichnet, daß** der Abstand zwischen dem Ende des Verbindungsmittels (11) im montierten Zustand und dem Sicherungselement (19) zwischen 5 und 200 mm, vorzugsweise zwischen 75 und 125 mm, beträgt.

16. Verbindung nach einem der Ansprüche 1 bis 15, **dadurch gekennzeichnet, daß** mindestens eines der anderen Bauteile (3) aus Metall, Stahlbeton oder Mauerwerk besteht.

17. Verbindung nach einem der Ansprüche 1 bis 16, **dadurch gekennzeichnet, daß** das erste Bauteil (2) ein Kreuzbalken aus Holz in einem Holztragwerk ist.

18. Verwendung der Verbindung nach einem der Ansprüche 1 bis 17 im Holzbau.

19. Verwendung nach Anspruch 18 in einem Tragwerk oder Fachwerk.

20. Verwendung nach Anspruch 18 im Möbelbau, insbesondere im Massivhotzmöbelbau.

21. Verwendung nach Anspruch 18 im Verbau von Ptattenwerkstoffen, vorzugsweise von solchen Platten, die aus mehreren Holzschichten zusammengesetzt sind.

## Claims

1. A joining system (1) for fixedly joining at least two elements (2, 3), comprising
- at least one first element (2) consisting of wood or woodlike material, in particular girder, which is adjacent at one of its ends to the other element (3) at a contact face (14) and is attached to this with a joining means (11), and
- at least one shear connector (7) made of a high-strength material, the shear connector being connected to one of the elements (2), in particular being integrated into it,
**characterized in that**
the shear connector (7) is provided with a continuous recess (9) and the joining means (11) extends through the recess (9), so it is freely movable in the longitudinal direction and cooperating with a counterpart at or in the other element (3), and that the first element (2) has a recess (15) on the side of the shear connector (7) facing away from the other element (3), the longitudinal axis (16) of this recess (15) forming an angle with the longitudinal axis (5) of the element (2), such that the two recesses (5, 15; 6, 18) intersect rendering the joining means (11) accessible.

2. The joining system according to Claim 1, **characterized in that** the shear connector (7) is provided with a plurality of projections (8), in particular mandrels, for integral anchoring in one of the elements (2).

3. The joining system according to one of Claims 1 through 2, **characterized in that** the element (2) is designed to be divisible, preferably in its middle plane (4), for introducing the shear connector (7).

4. The joining system according to Claim 3, **characterized in that** the element (2) is divided in the plane (4) in which the tensile or compressive zone of the element (2) is situated, in order to receive the connecting part (7).

5. The joining system according to one of Claims 1 through 4, **characterized in that** the joining means (11) is equipped with a threaded section for fastening to the other element (3), this threaded section cooperating with a threaded borehole in or on the other element (3).

6. The joining system according to one of Claims 1 through 5, **characterized in that** the joining means (11) is a screw, preferably a pan head screw with a hexagonal head (socket-head cap screw).

7. The joining system according to Claim 6, **characterized in that** the head (12) of the screw (11) has a diameter which is greater than the diameter of the borehole (9) created in the connecting part (7).

8. The joining system according to Claim 6 or 7, **characterized in that** the head (12) of the screw (11), in particular the pan head screw with a hexagonal head (socket-head cap screw) is arranged on the side of the shear connector (7) facing away from the other element (3).

9. The joining system according to one of Claims 1 through 8, **characterized in that** the recess (6) receiving the shear connector (7) preferably has a cross section in the form of a diamond or a square extending at least slightly beyond the length of the shear connector (7).

10. The joining system according to Claim 9, **characterized in that** the recess (6) running along the longitudinal axis (5) of the element (2) extends over the entire length of the element (2).

11. The joining system according to one of Claims 1 to 10, **characterized in that** the angle between the recesses (5, 15) is between 20° and 60°, preferably between 30° and 50°.

12. The joining system according to Claim 10 or 11, **characterized in that** the recess (15) arranged at an angle on the surface of the element (2) is provided with a closure, in particular with a stopper.

13. The joining system according to one of Claims 1 through 12, **characterized in that** a securing element (19) is arranged in the first element (2) behind the joining means (11) as seen from the contact surface (14), and prevents displacement of the joining means (11) relative to the shear connector (7).

14. The joining system according to Claim 13, **characterized in that** the securing element (19) is a pin.

15. The joining system according to Claim 13 or 14, **characterized in that** the distance between the end of the joining means (11) in the mounted state and the securing element (19) is between 5 and 200 mm, preferably between 75 and 125 mm.

16. The joining system according to one of Claims 1 through 18, **characterized in that** at least one of the other elements (2, 3) is made of metal, steel-reinforced concrete or masonry.

17. The joining system according to one of Claims 1 to 16, **characterized in that** the first element (2) is a cross-beam made of wood in a wooden supporting structure.

18. A use of a joining system according to one of Claims 1 through 17, in wood construction.

19. The use according to Claim 18 in a supporting structure or framework.

20. The use according to Claim 18 in construction of furniture, especially in construction of solid wood furniture.

21. The use according to Claim 18 in construction of board materials, preferably of boards composed of multiple layers of wood.

## Revendications

1. Assemblage (1) destiné à un assemblage inamovible entre au moins deux éléments (2, 3) plats ou en forme de barres, constitué par
- au moins un premier élément (2) en bois ou en matériau à base de bois, en particulier une poutre, dont une des extrémités est adjacente à l'autre élément (3) au niveau d'une face de contact (14) et est fixé contre ledit élément par un moyen d'assemblage (11), et
- au moins une clavette (7) en matériau très résistant, assemblée avec le premier élément (2) en étant posée dans un évidement (6) intégré dans celui-ci,
**caractérisé en ce que** la clavette (7) est munie d'un évidement (9) traversant, à travers lequel s'étend le moyen d'assemblage (11), qui est librement mobile dans le sens longitudinal et coopère par conjugaison de forme avec une partie complémentaire sur ou dans l'autre élément (3), et **en ce que** le premier élément (2), sur le côté de la clavette (7) opposé à l'autre élément (3), comporte un évidement (15), dont l'axe longitudinal (16) forme un angle avec l'axe longitudinal (5) du premier élément (2), les deux évidements (5, 15; 6, 18) se coupant de telle sorte que le moyen d'assemblage (11) est accessible.

2. Assemblage selon la revendication 1, **caractérisé en ce que** la clavette (7), en vue d'un ancrage intégral, est munie d'un nombre de saillies (8), en particulier des picots.

3. Assemblage selon l'une quelconque des revendications 1 à 2, **caractérisé en ce que** l'élément (2) est réalisé de façon séparable en deux, de préférence dans le plan médian (4), pour pouvoir y loger la clavette (7).

4. Assemblage selon la revendication 3, **caractérisé en ce que** l'élément (2), en vue de recevoir la clavette (7), est partagé dans le plan (4), dans lequel se situe la zone de traction ou de pression de l'élément (2).

5. Assemblage selon l'une quelconque des revendications 1 à 4, **caractérisé en ce que** le moyen d'assemblage (11), pour sa fixation contre l'autre élément (3), est muni d'une partie filetée, qui coopère avec un taraudage sur ou dans l'autre élément (3).

6. Assemblage selon l'une quelconque des revendications 1 à 5, **caractérisé en ce que** le moyen d'assemblage (11) est une vis, de préférence une vis cylindrique à six pans creux.

7. Assemblage selon la revendication 6, **caractérisé en ce que** la tête (12) de la vis (11) a un diamètre supérieur au diamètre du perçage (9) réalisé dans la clavette (7).

8. Assemblage selon la revendication 6 ou 7, **caractérisé en ce que** la tête (12) de la vis (11), en particulier de la vis cylindrique à six pans creux, est disposée sur le côté de la clavette (7) opposé à l'autre élément (3).

9. Assemblage selon l'une quelconque des revendications 1 à 8, **caractérisé en ce que** l'évidement (6), qui est destiné à recevoir la clavette (7) et est formé de préférence avec une section en forme de losange ou de carré, s'étend sur toute la longueur de la clavette (7) au moins légèrement au-delà de celle-ci.

10. Assemblage selon la revendication 9, **caractérisé en ce que** l'évidement (6), qui s'étend le long de l'axe longitudinal (5) de l'élément (2), s'étend sur toute la longueur de l'élément (2).

11. Assemblage selon l'une quelconque des revendications 1 à 10, **caractérisé en ce que** l'angle formé entre les évidements (5, 15) est compris entre 20° et 60°, de préférence entre 30° et 50°.

12. Assemblage selon la revendication 10 ou 11, **caractérisé en ce que** l'évidement (15), disposé en angle est muni sur la surface de l'élément (2), d'une fermeture, en particulier un bouchon.

13. Assemblage selon l'une quelconque des revendications 1 à 12, **caractérisé en ce que** dans le premier élément (2), derrière le moyen d'assemblage (11), par référence à une vue à partir de la surface de contact (14), est prévu un élément de blocage (19) qui empêche un déplacement du moyen d'assemblage (11) par rapport à la clavette (7).

14. Assemblage selon la revendication 13, **caractérisé en ce que** l'élément de blocage (19) est une cheville.

15. Assemblage selon la revendication 13 ou 14, **caractérisé en ce que** la distance entre l'extrémité du moyen d'assemblage (11), à l'état monté, et l'élément de blocage (19) est comprise entre 5 et 200 mm, de préférence entre 75 et 125 mm.

16. Assemblage selon l'une quelconque des revendications 1 à 15, **caractérisé en ce qu'**au moins l'un des autres éléments (3) est réalisé en métal, béton armé ou maçonnerie.

17. Assemblage selon l'une quelconque des revendications 1 à 16, **caractérisé en ce que** le premier élément (2) est une traverse en bois dans une ossature porteuse en bois.

18. Utilisation de l'assemblage selon l'une quelconque des revendications 1 à 17 dans la construction en bois.

19. Utilisation selon la revendication 18 dans une ossature porteuse ou une charpente.

20. Utilisation selon la revendication 18 dans la fabrication des meubles, en particulier dans la fabrication des meubles en bois massif.

21. Utilisation selon la revendication 18 dans le boisage par panneaux, de préférence de panneaux formés par plusieurs couches de bois.
